# EUROPEAN PATENT APPLICATION

(11) **EP 3 731 361 A1**
(43) Date of publication of application: **28.10.2020**
(21) Application number: 19171440.1
(22) Date of filing: 26.04.2019
(51) Int. Cl.: H02G 15/04, H02G 15/072, H02G 1/14

(54) **CABLE FITTING**

(71) Applicant: Brugg Kabel AG, 5200 Brugg (CH)
(72) Inventor: Adili, Sedat, 8630 Rüti (CH)
(74) Representative: Keller Schneider Patent- und Markenanwälte AG (Bern)

(57) **Abstract**

An inventive cable fitting (1) for high voltage cables, comprises a rigid core insulator (5) with a central duct suitable to receive a high voltage cable conductor. An elastomeric stress relief element (8) is cast around and thereby attached to a first part of the rigid core insulator (5). The stress relief element (8) comprises an insulating volume (9) made of elastomeric material, a field deflector (11) and a shield electrode (10). The stress relief element (8) is arranged so that it can receive a high voltage cable.

## Description

### Technical Field

The invention relates to a cable fitting for high voltage cables, a cable end comprising such a fitting, a method to produce the cable fitting according to the invention and a method to produce the inventive cable end.

### Background Art

Known high-voltage cable end terminations and cable junctions typically comprise a rigid core insulator and an electrically insulating, elastomeric stress relief element coaxially arranged around a longitudinal axis and matching the rigid core insulator through a conical interface.

EP0731994B2 is a representative of such prior art. During operation of a high voltage component, a rating current is conducted through the cable termination. The cable enters the interior of the termination through a stress relief element, for example a stress relief cone. The function of the stress relief element is to provide a smooth transition of the very high electric field in the electric insulation of the cable into a much lower electric field in the interior of the termination.

The mating quality of the interface between the core insulator and the stress relief element needs to be superior such that no voids between the stress relief element and the core insulator are formed: These voids are known to be responsible for causing a dielectric breakdown occurring along this interface.

In order to avoid forming voids at the interface, the prior art suggests that a large pressure is required to be exerted by the stress relief element against the surface of the core insulator: The pressure makes the elastic material of the stress relief element conform in such a way that the material fills all uneven imperfections of the surface of the core insulator.

The required pressure exerted by the stress relief element on the core insulator leads to comparatively bulky cable fittings having a comparatively large overall diameter.

The WO 2017/050859 tries to overcome this disadvantage by providing a rigid member for pressurizing the elastomeric stress relief element at the interface. The rigid member pushed the stress relief element against the core insulator in order to obtain the pressure needed according to the prior art without a bulky stress relief element.

Also the DE 19748887 uses pressing means to press the elastomeric stress relief element on the rigid core insulator.

However, by providing the core insulator and the stress relief element as two separate parts and by pushing them together, there is a danger of enclosing dirt particles in the sensible interface during the installation and there is further the danger that the pressing means providing the pushing force degrade such that the force applied decreases with time and voids appear. This may cause discharges which can destroy the cable fitting.

### Summary of the invention

It is the object of the invention to create a cable fitting pertaining to the technical field initially mentioned, with a high reliability and which can be used for high voltages. High voltages are in general voltages from 1kV to more than 1000kV. The invention is preferably suitable for voltages above 50 kV, especially for voltages between 100 and 800 kV, preferably between 200 and 550 kV. The inventive cable fitting is particularly easy to install at site as it is easy to insert the high voltage cable.

The solution of the invention is specified by the features of claim 1. According to the invention the cable fitting for high voltage cables comprises a core insulator. The core insulator has a central duct suitable to receive a high voltage current conductor. The cable fitting further comprises a carrier tube, which is electrically conducting or semiconducting along its length. The carrier tube is located within the central duct or it is a part of the core insulator. The cable fitting further comprises a stress relief element. The stress relief element is elastomeric. The stress relief element comprises an insulating volume made of a cast material. The cast material is elastomeric and electrically insulating. The stress relief element comprises further a field deflector and a shield electrode. Both, the field deflector and the shield electrode, are made of elastomeric and electrically conductive or semiconductive materials. The insulating volume is cast around a first part of the core insulator. By being cast around the first part of the core insulator a tight connection between the core insulator and the stress relief element is established.

Preferably, the carrier tube is in direct contact with the shield electrode. Preferably, the carrier tube touches the shield electrode.

A tight connection is, according to the invention, an interface between two parts without anything causing discharges in between. Things which may cause discharges are for example air bubbles, dust or dirt grains and/or water droplets. A tight connection is preferably established by means of vulcanisation after the casting by which preferably an adhesive connection is established between the core insulator and the stress relief element. Besides the adhesive forces also cohesion and/or a mixture of both can establish a tight connection. Preferably the tight connection is also mechanically stable. Preferably, it needs a pulling force of more than 2 N/mm², especially more than 4 N/mm² to destroy the connection.

In contrast to the prior art, the invention does not require a high pressure between the stress relief elements and the core insulator and therefore it does not need to push a stress relief element onto the core insulator. Instead, the tight connection is established by casting and preferably by vulcanising. The resulting connection between the core insulator and the elastomeric insulating volume is mechanically stable enough to avoid any risks of delamination or interface breaking during normal installation, transportation and use of the cable fitting.

The process of casting avoids the inclusion of air bubbles. Further, the cable fitting with the tight connection can be produced and tested before installing it on site. Therefore, the installation on site is simplified and any inclusions which may happen during the production of the cable fitting can be discovered before delivery.

A cable fitting can be designed as a cable end termination, as a high-voltage outdoor cable end termination, as a high-voltage indoor cable end termination for example for a transformer or a gas insulated switchgear component, or as a high-voltage cable junction for connecting two high voltage cables together.

Preferably, in the context of this invention, a semiconductor which contacts a conductor is essentially on the same electrical potential as this conductor but it does not carry currents which heat it significantly.

Preferably, in the context of this invention, a direct electrical contact means that two of the listed parts are directly connected to each other, preferably by touching each other or by a connecting device like a wire or a band with no other purpose but to establish an electrical contact. An indirect electrical contact means however, that two of the listed parts are connected such that they are on the same electrical potential but this connection is established via further parts which do have further functions besides establishing a contact. These parts can be for example, the cable conductor, the connector, the carrier tube, the fitting conductor, the connection bolt, the head armature, the shield electrode, the protection box, the semiconductive cover, the fixing flange or the deflector.

The core insulator is axially symmetric and has typically the shape of a concentric cylinder which preferably tapers into circular cones towards both or one end. Preferably, the cones point outwards, away from the cylindrical section. Preferably, one or both ends of the core insulator are flat. The central duct runs along the axis of symmetry which is also the longitudinal axis.

The core insulator can be divided in a first and in a second part. The first part is the part of the core insulator around which the insulating volume is cast.

In one preferred embodiment there is a fixing flange and the first part of the core insulator is the region of the core insulator between its one end and the fixing flange.

In one embodiment, there is no fixing flange and the first part is the region of the core insulator between its one end and the axial position in which the cross section of the core insulation reaches for the first time, having started at the one end, its maximal area compared to all cross sections of the core insulator along its longitudinal axis. For example, if the core insulator is a concentric cylinder with flat ends, the area of the cross section is the same at all axial positions and therefore the first part if the core insulator is simply its end according to this preferred definition. If the core insulator is a concentric cylinder with tapered ends, either extending inwardly or outwardly, the area of the cross section increases until the cylindrical part of the core insulator is reached and therefore the first part ends at the beginning of this cylindrical part.

The carrier tube is located within the central duct or it is a part of it. The carrier tube, in the sense of this invention, is a concentric cylindrical tube which is conductive or semiconductive along its length and, during operation of the cable fitting, at the same voltage potential as the high voltage current conductor. The carrier tube provides an electric field free volume during operation in its inside.

In one embodiment, the carrier tube provides the mechanical support for the condenser core and the mechanical attachment of the shield electrode.

The carrier tube is at the same voltage potential with the shield electrode and, if present, the head armature and/or the connection bolt.

In one embodiment, the carrier tube is at the same voltage potential as the innermost conductive foil of the capacitive grading body. In this embodiment, the volume between the carrier tube and the innermost conductive foil of the core insulator is also electric field free.

The carrier tube and the core insulator are preferably connected to each other by an adhesive, by casting or wrapping the core insulator or parts of it around the carrier tube.

In one embodiment, the wall thickness and/or the material of the carrier tube changes along its length. In one embodiment, there is an insulator attached to the inner surface of the carrier tube.

In one embodiment the carrier tube acts as the innermost conductive foils of the-capacitive grading body. In this case and in other cases where there is no innermost conductive foil on the voltage potential of the high voltage current conductor during operation, the space between the carrier tube and the central duct is filled with electrical insulating material such that there are no delaminations, voids or dirt particles, since these would cause partial discharges and eventually a breakdown of this part of the insulation.

Preferably the carrier tube is conductive everywhere. Preferably, the carrier tube has a constant wall thickness and/or a constant composition over its whole length.

Preferably, the carrier tube extends out of the core insulator on at least one end of the core insulator. Preferably, the carrier tube extends out of the core insulator on both ends of the core insulator.

Preferably, there is a mechanical support tube placed inside the carrier tube in order to support the carrier tube against pressure and/or to protect it.

Preferably, the carrier tube is the innermost conducting layer of a field grading core insulator. Preferably, the carrier tube is the innermost conductive layer of a field grading core insulator and there is a mechanical support tube made of insulating material.

Preferably, the carrier tube comprises the innermost conductive layer of a field grading core insulator. Preferably, the carrier tube comprises the innermost conductive layer of a field grading core insulator and a mechanical support tube made of conducting material.

Preferably, the carrier tube is made of metal. Preferably, the carrier tube is made of an aluminium alloy or aluminium. In another embodiment, the carrier tube is preferably made of copper or a copper alloy.

Preferably, the carrier tube made of aluminium alloy or aluminium is coated with an insulator on its inside. Preferably, the carrier tube is coated with an insulator of varying thickness. For example, the insulator on the inside of the carrier tube forms supporting rips which can keep a high voltage current conductor to be placed inside the carrier tube in a desired position with respect to the carrier tube. For example the insulator on the inside of the carrier tube forms a step which ensures that a connector stays at a desired place with respect to the carrier tube.

The high voltage current conductor can be a fitting conductor or a cable conductor. In another embodiment the carrier tube itself is the high voltage current conductor. If the carrier tube is used as high voltage current conductor, the carrier tube is preferably made of copper or a copper alloy.

At operation the shield electrode is at the same electric potential as the cable conductor of the cable on which the cable fitting is installed.

In the same situation, the deflector is at the same potential as the second semiconductive layer and/or the cable sheath of the cable. Typically, the potential of the deflector and the second semiconductive layer and/or the cable sheath is the ground potential.

Casting, in the sense of the invention, is a process in which a liquid material is poured into a mould, which contains a hollow cavity of the desired shape, and is then allowed to solidify. Preferably, casting is followed by a vulcanization step. Preferably the vulcanization happens at room temperature or at elevated temperature and pressure.

In one embodiment, a surface of the first part of the core insulator is treated with a primer which improves the quality and the reliability of the tight connection between the core insulator and the insulating volume.

The cable fitting has a longitudinal axis which is in most cases also a symmetry axis. The longitudinal axis is used to define a coordinate system with an axial position and a radial distance. The axial position of an object is the position on the longitudinal axis at which the plane on which the object is positioned and which is oriented perpendicular to the longitudinal axis, crosses said axis. The radial distance of an object is the shortest distance between an object and the longitudinal axis.

In one embodiment, the core insulator is more rigid than the insulating volume of the elastomeric stress relief element.

In one embodiment, the elastic modulus of the material or the material combination of the core insulator is higher than the elastic modulus of the insulating volume.

To compare rigidity or elastic modulus of core insulator and insulating volume, preferably both objects and materials are tested in the same orientation, whereby the core insulator and the insulating volume are arranged with respect to each other as they are in the cable fitting.

Choosing a core insulator of higher rigidity has the advantage that holding and installing of the cable fitting as a whole is easier, as the rigid core insulator can be used for this purpose.

In one embodiment, the insulating volume is made of an elastomeric polymer. Preferably, the insulating volume is made of silicone rubber.

Silicone rubber can be casted and it is an insulator with high breakdown strength. Further, it establishes tight connections to many other materials when it is casted and possible vulcanized onto them. The elasticity of silicone rubber enables a tight fit, and preferably a tight connection, between the cable insulation and the insulating volume by simply making a diameter of a duct in the stress relief element slightly smaller than the outer diameter of the cable insulation.

In one embodiment, the core insulator comprises a polymeric material which is rigid. Preferably the polymeric material is epoxy resin. Preferably, the polymeric material governs the mechanical properties of the core insulator. Preferably, the core insulator consists to more than 25 weight percent of the polymeric material.

The use of a rigid polymeric material facilitates the production of rigid core insulators in any desired shape. Epoxy resin has a high dielectric strength. Further, it is a material which is more rigid than casted silicone rubber.

Other materials, like fibers and/or conductive or semiconductive foils, may be casted inside the epoxy resin in order to gain or improve desired properties, especially electrical and/or mechanical properties.

In one embodiment, the core insulator comprises conducting layers separated by insulating layers. In one embodiment, the conducting layer are made of conductive foil, for example of aluminum foil. In one embodiment, the insulating layers are made of resin impregnated paper. In further embodiments, the layers are formed by extrusion and/or by painting. The embodiment has the advantage of being compact.

In another embodiment, the electric field control within the core insulator is done geometrically, with only grounded guard electrodes which lower the electric field. In this embodiment, the core insulator comprises a guard electrode which can be grounded. Preferably, this embodiment is used for voltages up to 72 kV. It has the advantage of a simple and therefore cost efficient structure

In one embodiment, the outside of the stress relief element is at least partially covered with a semiconductive cover. Preferably, the semiconductive cover serves as ground potential. Preferably, the semiconductive cover is made of conductive or semiconductive paint which is painted or sprayed onto the outside of the stress relief element. Preferably, the semiconductive cover is made of a semiconducting or conducting tape wound onto the stress relief element. Preferably, the semiconductive cover covers the region which has at least a part of axial positions of the shield electrode and the region which has the at least a part of axial positions of the deflector and all axial positions in between these two regions.

During operation, there is an electric field between the shield electrode being on a high electric potential and the deflector being on a ground potential. The semiconductive cover concentrates and defines the electric field area in radial direction such that it does not extend further out of the insulating volume of the stress relief element.

In one embodiment, the semiconductive cover extends to a region of the stress relief element which is supposed to be in direct or indirect contact with the second semiconductive layer of a cable connected to the cable fitting. In this way, the semiconductive cover is grounded via the second semiconductive layer of the cable.

In one embodiment, the semiconductive cover extends to a region of the stress relief element which is supposed to be in direct or indirect contact with the fixing flange mounted to the core insulator. In this way, the semicondcuctive cover is grounded via the second fixing flange.

Preferably, the semiconductive cover covers the outside of the stress relief element completely. In this embodiment, the semiconductive cover is especially easy to apply. In addition, if there is a fixing flange which contacts the stress relief element, the stress relief element can be grounded over the fixing flange. In addition, there is preferably a direct contact to the second semiconductive layer or to the cable sheath of the cable in the region where the cable enters the stress relief element. Therefore, this embodiment ensures that the semiconductive cover, the second semiconductive layer and/or the cable sheath of the cable and the fixing flange are on the same electrical potential during operations.

Partially covering the outside of the stress relief element with a semiconductor is a particularly simple way to concentrate the electric field inside the insulating volume. Using a semiconductive or conductive paint as semiconductive cover makes the production particularly easy. Using a semiconductive or conductive tape as a semiconductive cover allows to ensure a desired minimum thickness of the semiconductive cover.

The semiconductive cover can be conductive.

Preferably, the stress relief element with the semiconductive cover on it is axially symmetric.

In one embodiment, the core insulator is a capacitive grading body. Preferably, the core insulator consists of a concentric arrangement of conductive foils and insulating bulk material. The insulating bulk material is preferably made of crepe paper or another material. The crepe paper or other material is preferably impregnated or filled by a liquid casting material which solidifies by means of curing to a rigid polymer insulating material. Preferably, this polymer material is epoxy resin.

Sometime, prior art speaks of "field grading material". The term "field grading material" is often used for materials with a voltage depending resistivity and/or permittivity. Such "field grading materials" can be used to control the electric field using the linearity or non-linearity of those materials and its applicability is often restricted to certain voltage ranges. A capacitive grading body according to the invention, comprises a special geometric arrangement of conductive elements and insulating materials with voltage independent resistivity and permittivity. Capacitive grading makes it possible to divide the electric potential in equal steps and thus keeping the electric field strength constant and low along the entire insulating distance.

In this embodiment, the conductive and the insulating foils are both impregnated with a rigid insulating material, preferably with epoxy resin.

Using a capacitive grading body as core insulator allows to build a compact cable fitting. Further a capacitive grading body can be used for both, AC and DC conditions.

In one embodiment in which the core insulator is a capacitive grading body, the outermost conductive foil of the core insulator is electrically contacted to a grounding device.

Preferably, an innermost conductive foil of the core insulator is electrically contacted to the shield electrode. Preferably, the carrier tube is electrically contacted to the shield electrode and therefore it is at the same electric potential as the shield electrode.

This has the advantage that it is ensured that the core insulator controls the electric potential difference between a ground potential and the high voltage potential of the high voltage current conductor during operation.

The core insulator is preferably axially symmetric. The innermost conductive foil has the smallest radial distance of all conductive foils of the capacitive grading body and the outermost conductive foil has the largest radial distance of all conductive foils of the capacitive grading body. Preferably, the innermost conductive foil has the largest axial extend and the outermost conductive foil has the smallest axial extend of all conductive foils of the core insulator.

In order to avoid discharges between the carrier tube and the high voltage current conductor, the carrier tube and the high-voltage conductor should be on the same electric potential. The shield electrode is also at this potential. Connecting the shield electrode, the carrier tube, which can be the innermost conductive foil, and preferably and if possible the innermost conductive foil, ensures that all connected elements are on the same potential and that there is consequently no voltage drop between them. The voltage drops are therefore moved to the conductive foils of the core insulator which have an insulating bulk material between them.

In one embodiment, the core insulator comprises suitable formed electrodes, preferably in the vicinity of the fixing flange, such that a geometrical electric field control occurs.

Such a core insulator has the advantage of being easy to produce. The carrier tube is located within the central duct of the core insulator and it is on the same potential as the high voltage conductor during operation of the cable fitting. The fixing flange or other parts located at the same axial position as the outer boundary of the core insulator but having a larger radial distance than the outer boundary of the core insulator, are, while operating, on ground potential. The outer boundary of the core insulator are the regions with the largest radial distances which belong to the core insulator. The electrode of the core insulator preferably increases the axial extend of these parts on ground potential and smoothen their edges, thereby reducing the local field strengths to values below the dielectric strength of the core insulator

In one embodiment, the cable fitting comprises a fixing flange. Preferably, the fixing flange acts as a barrier to the insulating volume such that the insulating volume and the stress relief element are only on one side of the fixing flange. In this embodiment, the core insulator extends on both sides of the fixing flange.

The fixing flange allows to fix the cable fitting relative to the device to be connected to the cable or relative to the high voltage cable to be connected. The fixing flange is preferably essentially disc-like with an opening in its center. This opening has preferably an inner diameter which essentially equals the outer diameter of the core insulator such that the fixing flange surrounds the core insulator. Preferably, there is no gap between the opening of the fixing flange and the core insulator such that there is a barrier, separating the first part of the core insulator from a second part of the core insulator.

This embodiment allows the fixing flange to be used as one part of the mold for casting the insulating volume. This establishes a mechanical connection between the insulating volume and the fixing flange, increasing the mechanical stability of the cable fitting.

Preferably, the barrier is fluid and gas tight. This has the advantage that the second part of the core insulator can be surrounded by insulating oil or gas.

Preferably, the core insulator, the carrier tube, the fixing flange, a head armature and an outdoor insulator are part of a prefabricated subunit. The use of such prefabricated subunits facilitates the production of the cable fitting as only the stress relief elements remains to be casted onto the first part of the core insulator and this first part forms part of the outer surface of the prefabricated subunit.

In one embodiment, an insulating medium has a different composition than the insulating volume. This insulating medium surrounds the second part of the core insulator. The insulating medium is preferably gel, oil or a polymeric material.

This embodiment has the advantage that the insulating medium can be chosen depending on the requirements of the user.

In one embodiment, the cable fitting comprises an outdoor insulator. This outdoor insulator comprises a hollow tube body, preferably carrying sheds on its outside and preferably extending from the fixing flange to the head armature. Thereby, the outdoor insulator surrounds the second part of the core insulator and, preferably, the insulating medium. The hollow tube body is preferably made of fibre reinforced epoxy. The sheds are preferably made of the same or of a different insulating material such as silicone.

Sheds increase the creeping distance between the head armature and the fixing flange, thereby lowering the risk of leakage currents on the outside of the outdoor insulator.

Further the outdoor insulator protects the second part of the core insulator and, if applicable, the insulating medium from the environment.

In one embodiment of the cable fitting, the core insulator is in direct contact with a head armature. Preferably, sheds are mounted directly on the core insulator. Preferably the sheds are made of silicone and extruded, glued or casted around the core insulator.

The embodiment eliminates the need of a hollow tube body and another insulating medium. This facilitates the production and reduces the number of interfaces.

Sheds mounted directly on the core insulator protect the core insulator from the environment besides increasing the creeping distance between the heat armature and the fixing flange.

In one embodiment, the core insulator is in direct contact to the head armature and it is surrounded by a hollow tube body, preferably in the form of a fibre reinforced epoxy tube. Preferably, sheds are mounted onto the hollow tube body in the form of a fibre reinforced epoxy tube.

This embodiment eliminates the need for another insulating medium and protects the core insulator in harsh environments.

In one embodiment of the cable fitting, the carrier tube is in direct contact with the head armature.

In one embodiment, the carrier tube extends from a contact region with the shield electrode to the head armature of the cable fitting. The carrier tube is preferably connected to the head armature in a fluid-tight way. Preferably, the carrier tube and the innermost conductive foil of the core insulator contact each other at least indirectly.

In one embodiment, the carrier tube is used as the innermost conductive foil of the core insu lator.

In this embodiment, the carrier tube ensures that the head armature and the shield electrode are on the same electric potential. Further, the carrier tube can increase the mechanical stability of the cable fitting, if it is designed to be mechanically stable. A fluid-tight connection between the head armature and the carrier tube prevents humidity and dirt from penetrating inside into the carrier tube. This increases the reliability.

If the carrier tube and the innermost conductive foil of the core insulator contact each other, either directly or indirectly, they are on the same voltage potential during operation. This results in a field free zone between the core insulator and the innermost conductive foil and the absence of a strong electric field lowers the requirements for the insulator inside this zone. This increases the reliability especially if thermal expansion of the carrier tube occurs.

In one embodiment, the cable fitting comprises a protection box. The protection box surrounds the stress relief element. Preferably, the protection box is connected to the fixing flange with spring elements in order to allow thermal expansion of the stress relief element in axial direction. Further, there is preferably a gap, filled with air or compressible material, in radial direction between the stress relief element and the protection box in order to allow thermal expansion and expansion due to the insertion of a high voltage cable in radial direction.

In many cases the duct in the stress relief element is chosen to be slightly smaller than the outer diameter of the insulation layer of the high voltage cable which is supposed to be connected to the cable fitting. Due to the elastomeric property of the stress relief element, the insertion of the cable deforms the stress relief element: Its outer diameter increases slightly and in such a way that its volume stays essentially constant. The resistance of the elastomeric material against such a deformation presses the stress relief element against the insulation layer of the cable.

The protection box protects the stress relief element from the environment. It is therefore preferably UV-resistant and waterproof. The stress relief element expands during operation, mainly due to the dissipated heat caused by the current passing through the cable conductor. Mounting the protection box to the fixing flange with spring elements allows a compact design which can nevertheless be used in situations where the temperature changes significantly for example due to changes in the current and due to changes in the ambient temperature.

The spring elements are assembled such that there is essentially no pressure exerted onto the stress relief element by the protection box at low operating temperatures and at low currents. Even when the temperature rises, the exerted pressure should be small. Preferably, the protection box and the spring elements exert only enough force to support the weight of the stress relief element and to allow the expansion of the whole stress relief element in axial direction during its thermal expansion. Preferably, the protection box and the spring elements exert only enough force to support the weight of the protection box and to allow the expansion of the whole stress relief element in axial direction during its thermal expansion.

As the fixing flange defines in many cases the size of the cable fitting in radial direction, leaving small gaps between the protection box and the stress relief element in radial direction does not increase the overall size of the cable fitting in radial direction in most cases. Therefore leaving gaps in radial direction for thermal expansion is a preferred solution. In other embodiment, the protection box is mounted or shaped directly around the stress relief element without a gap and allows the expansion of the stress relief element by its own radially structural flexibility. Such a radially structural flexibility can, for example, be achieved by accordion like walls.

A spring bolt is an example of a spring element.

The protection box can be made of a conductive, a semiconductive or an insulating material. Preferably, it is made of insulating and therefore not conductive material, for example plastic. If it is made of or comprises conductive or semiconductive material, the protection box is preferably grounded. The protection box can be made of a conductive or semiconductive material which is coated on one of both sides with an insulator material or it can be made of an insulating material which is coated on one or both sides with a conductive or semiconductive material.

In one embodiment, the cable fitting comprises a protection box which surrounds the stress relief element such that there is essentially everywhere a gap between the stress relief element and the protection box. Preferably the protection box is connected to the fixing flange. The gap is filled with air or compressible material in order to allow thermal expansion of the stress relief element in radial and axial direction.

This embodiment eliminates the need for spring elements. This increases the reliability.

In one embodiment, the cable fitting comprises a connector of, preferably, a bolted, crimped, click-in or multicontact type. The connector is placed inside the carrier tube. Preferably, the connector is placed inside the carrier tube and inside the first part of the core insulator.

A connector is made of an electrically good conducting material and it comprises at least one, preferably two receiving sections. The receiving section can receive and fix a cable conductor or a fitting conductor, such that there is a reliable electrically conducting contact between the cable and/or fitting conductor and the connector.

An electrically good conducting material is a material which conducts electricity as good as the cable conductor and/or the fitting conductor which are supposed to be used during operation of the cable fitting. Preferably, the connector is made of copper or a copper alloy. A connector of a click-in type comprises a receiving section with a fixing system which allows to fix a cable or fitting conductor simply by pushing it in into the receiving section. For example a connector of click-in type can comprise a blind hole with barbs and laminae suitable to contact and fix the cable or fitting conductor.

A connector of the bolted type comprises a receiving section in the form of a cylindrical section with a number of radial extending holes which can receive bolts. A cable or fitting conductor is inserted in the cylindrical section and then fixed by the insertion of bolts in radial direction. In one embodiment, the bolts and the holes comprise threads and the bolts are inserted by screwing them in.

A connector of the crimped type comprises a receiving section in the form of a cylindrical section which is suitable to be crimped. A cable or fitting conductor is inserted in the cylindrical section and then fixed by local compression of the cylindrical section in radial direction.

A multicontact connector comprises more than one receiving section, preferably it comprises exactly two receiving sections.

The use of a connector reduces the length of free cable conductor needed for the installation of the cable fitting on the cable and facilitates the installation of the cable fitting on the cable.

A connector inside the carrier tube can be used to establish a direct electrical contact between the cable conductor and the carrier tube. This is preferably used if the carrier tube is supposed to carry the current in the region between the connector and the head armature. This means that the carrier tube acts as high voltage current conductor. Preferably, the carrier tube is, in this embodiment, made of a well conducting material such as copper or a copper alloy. Preferably, in this embodiment, the wall thickness of the carrier tube is chosen to be thick enough to avoid a strong heating of the carrier tube during operation. This embodiment has the advantage that there is no need for an additional fitting conductor.

In a preferred embodiment, there is an insulator arranged between the connector and the carrier tube. This can be archived by surrounding at least part of the outside of the connector with an insulating material such as an insulating tape and /or by covering at least part of the inside of the carrier tube with an insulator. Such an insulator ensures that the main current flows through a fitting conductor which is located inside the carrier tube. The carrier tube can be constructed from a less well conducting material and with a small wall thickness as it only ensures that the carrier tube itself and the shield electrode are on the potential of the high voltage current conductor. This embodiment has the advantage that the carrier tube costs less and that the fitting conductor and/or the connector can be chosen depending on the requirements of the situation where the cable fitting is supposed to be used.

In one embodiment, a cable fitting with a connector comprises a fitting conductor which extends from one side of the connector to at least the head armature and/or the connection bolt. The fitting conductor runs inside the carrier tube.

Preferably, there is an electrical insulator between the fitting conductor and the carrier tube and this insulator is preferably air. In this embodiment, there is an indirect connection between fitting conductor and carrier tube which is for example established via the head armature and possible the connection bolt, or via the shield electrode or in another way.

The fitting conductor can be a solid or a hollow cylinder of a conducting material or it can comprise many conducting wires, as a usual cable conductor. The fitting conductor continues the cable conductor in the region between the connector and the head armature.

In one embodiment, the connector has exactly two receiving sections. The connector is arranged in such a way inside the carrier tube that one of the receiving sections opens towards the head armature and the other one towards the stress relief element. The fitting conductor is in this embodiment connected to the receiving section of the connector which opens towards the head armature. In this embodiment, the fitting conductor carries the current.

In one embodiment, the connector is elongated and comprises one receiving section for a cable conductor. On the side opposite to this receiving section, the connector forms into a rod or into a hollow cylinder which extends at least to the head armature and/or the connection bolt or it becomes the connection bolt itself. In the embodiment, the connector carries the current. Such a connector is an elongated connector.

In one embodiment, the connector has exactly one receiving section for a cable conductor. The electrical connection between the connection bolt and the cable conductor is done by the connector, the carrier tube and preferably the head armature. In this embodiment, the carrier tube carries the current.

A solid or hollow cylinder as fitting conductor or an elongated connector have the advantage of increasing the mechanical stability of the cable fitting. A fitting conductor comprising electrically conducting wires has the advantage of having similar properties as the connected cable conductor. An electrical connection realized by the carrier tube alone avoids the need for an additional fitting conductor running inside it.

A cable end comprises a high voltage cable and a cable fitting according to the invention. The high voltage cable comprises
i) a cable conductor,
ii) preferably, a first semiconductive layer in direct contact with the cable conductor,
iii) an insulation layer made of a polymer surrounding the cable conductor and, if present, the first semiconductive layer,
iv) a second semiconductive layer surrounding the insulation layer,
v) preferably, a cable sheath surrounding the second semiconductive layer and
vi) a protective layer surrounding the second semiconductive layer and, if present, the cable sheath.

The second semiconductive layer and/or the cable sheath contacts the deflector, preferably directly. Preferably, the second semiconductive layer and/or the cable sheath contacts, directly or indirectly, the semiconductive cover and/or the protection box. The cable conductor contacts, at least indirectly, the shield electrode in such a way that the cable conductor and the shield electrode are at the same electric potential.

The direct and indirect contacts are all electrical contacts.

In such a way, the deflector and preferably the semiconductive cover and/or the protection box are on the same potential as the second semiconductive layer of the cable. The electrical contact between the second semiconductive layer and the deflector is preferably realised by a press fit with which the deflector sits onto the exposed second semiconductive layer of the cable.

The cable sheath can be electrically connected to the semiconductive cover. In another embodiment, the electrical connection between the deflector and the semiconductive cover can be made directly by an external copper braid. Further the semiconductive cover can extend to a region where it directly contacts the second semiconductive layer of the cable by a press fit.

The cable sheath can be electrically connected to the protection box. The electrical connection between the deflector and the protection box can be made directly by a conducting braid which is preferably made of copper or a copper alloy. Further the protection box can extend to a region where it directly contacts the second semiconductive layer or the cable sheath.

The shield electrode is on the same potential as the cable conductor due to a direct or indirect contact with it. The contact between cable conductor and shield electrode can be established via the carrier tube or by a press fit seat of parts of the shield electrode onto the cable conductor or onto the connector.

In one embodiment of a cable end, the shield electrode touches, and thereby directly contacts, the cable conductor.

In one embodiment of a cable end, the shield electrode touches, and thereby directly contacts, the connector.

In one embodiment of the cable end, the cable conductor is connected to the connector. The connector is in direct contact with the carrier tube. The carrier tube is in direct contact with the shield electrode. The carrier tube acts as the current conductor in this embodiment.

In this embodiment, the contact between the cable conductor and the shield electrode is established in an easy and reliable way.

In one embodiment, the cable conductor is connected to the connector. There is an insulator arranged between the connector and the carrier tube such that there is no direct but only an indirect electrical contact between the connector and the carrier tube. There is a direct electrical contact between the connector and the fitting conductor. There is a direct electrical contact between the fitting conductor and the connection bolt. The connection bolt either directly contacts the carrier tube or the connection bolt directly contacts the head armature and the head armature directly contacts the carrier tube. The carrier tube is in direct contact with the shield electrode.

In this way, during operation, the shield electrode is on the same potential as the cable conductor but no current flows through the carrier tube.

The use of a fitting conductor enables to construct the cable fitting from a modular system with a small number of different parts: The connector can be the same for all lengths and the fitting conductor can simply be cut to the desired length.

In this embodiment, the carrier tube does not act as current conductor. It is the fitting conductor which carries the current from the connector to the connection bolt.

In one embodiment of a cable end, the cable conductor is in direct contact with the connection bolt and/or the head armature. The connection bolt and/or the head armature is in direct contact with the carrier tube. The carrier tube is in direct contact with the shield electrode.

In this embodiment, the cable end is prepared in such a length that it reaches the head armature and/or the connection bolt.

In this embodiment, the contact between the cable conductor and the shield electrode is established in an easy and reliable way in the case of a cable fitting without a connector.

In this embodiment, the carrier tube does not act as current conductor. It is the cable conductor which carries the current all the way to the connection bolt.

In one embodiment of a cable end, the connector is elongated at one end and either connected to the connection bolt and/or the head armature directly or a part of the elongated connector is the connection bolt and/or head armature. The connection bolt and/or the head armature is in direct contact with the carrier tube. The carrier tube is in direct contact with the shield electrode.

In this embodiment, only a short cable end is needed but there is still only one receiving section needed at the connector which increases reliability and cable preparation time on site.

In this embodiment, the carrier tube does not act as current conductor. It is the connector which is elongated and which carries the current from its receiving section to the connection bolt.

The method to produce a cable fitting according to the invention comprises the following steps:
a) Providing a core insulator with a central duct suitable to receive a high voltage current conductor. The carrier tube is located within the central duct or it is a part of the core insulator. The carrier tube is semiconducting or conducting along its length.
b) Providing a mandrel of cylindrical shape having over most of its length a diameter equal to the smallest inner diameter of the deflector and preferably equal to the smallest inner diameter of the shield electrode,
c) Providing a field deflector and a shield electrode, both made of conductive or semiconductive materials which are elastomeric
d) Providing a mould, preferably in the shape of a circular cylinder with a cone-shaped or a flat end. The mould has a first central opening of the size of the outer diameter of the mandrel. The first central opening is located on an extension of the central duct when the mould is mounted to the core insulator. The mould has a second central opening. The second central opening is located on the end opposing the first central opening.
e) Placing the shield electrode at least partially on the carrier tube and/or the core insulator and thereby establishing a direct contact between the shield electrode and the carrier tube.
f) Arranging the mandrel with respect to the carrier tube and the core insulator in such a way that the mandrel follows the extension of the carrier tube and preferably in such a way that the mandrel is partially surrounded by the shield electrode and that preferably a part of the mandrel adjoins the core insulator and/or the carrier tube.
g) Placing the field deflector on the mandrel at a given distance from the shield electrode,
h) Placing the mould around the mandrel carrying the shield electrode and the field deflector such that, preferably, the mandrel closes the first central opening in the mould, and such that preferably the core insulator and/or the fixing flange closes the second central opening in the mould,
i) pouring a cast material in its liquid state, preferably a liquid silicone mass prepared for casting, inside the mould and thereby covering at least the first part of the core insulator, the shield electrode and the field deflector with the cast material,
j) curing, and preferably vulcanizing, the cast material such that it becomes the insulating volume
k) after curing, removing the mandrel.

Preferably, the shield electrode and the field deflector used in this method are prefabricated.

Preferably, the second central opening has either the size and the shape of the cross section of the core insulator at boundary between the first and the second part of the core insulator or a size larger than the cross section of the core insulator and such a shape that it can be closed by the fixing flange connected to the core insulator.

In one embodiment, the process comprises the step of painting or applying a semiconductive cover to at least parts of the outer surface of the stress relief element consisting of the insulating volume, the deflector and the shield electrode.

Using such a moulding procedure allows to produce the stress relief element and to establish a tight connection between the first part of the core insulator and the stress relief element at the same time. Further, the use of the mandrel allows a precise positioning of deflector and shield electrode.

In one embodiment, the process further comprises the step of mounting the connector in the carrier tube before arranging the mandrel.

In one embodiment, the process further comprises the steps of connecting a fitting conductor to a connector and mounting it within the carrier tube.

In one embodiment, the mould is made of a semiconductive material and it is not removed after curing such that it becomes the semiconductive cover. In this embodiment, the mould allows for thermal expansion of the insulation body for example by being made of an elastomeric material.

In one embodiment the mould is removed after curing.

In one embodiment, the mould comprises an inner layer made of semiconductive material, which becomes the semiconductive cover after curing, and an outer layer which is removed after curing. For example, the inside surfaces of the mould can be covered with semiconductive paint. This semicondcutive paint is the inner layer of the mould in this case. The semicondcutive paint sticks to the cured cast material better then to the outer layer of the mould.

The diameter of the mandrel over most of its length is preferably slightly smaller than the outer diameter of the insulation layer of the high voltage cable for which this cable fitting is designed.

"Most of the length" of the mandrel means that the mandrel shall have the desired diameter over the length between the first central opening of the mould and the beginning of the carrier tube and/or the beginning of the core insulator. The mandrel may have a smaller diameter in a part extending inside the carrier tube and a different diameter in a part extending outside of the mould. Preferably, the mandrel has a constant diameter.

Placing the shield electrode at least partially on the carrier tube, which extends preferably outside of the core insulator, establishes at the same time the electrical contact between carrier tube and shield electrode and, as the inner diameter of the shield electrode is preferably smaller or equal to the outer diameter of the carrier tube, establishes a mechanical fixing of the shield electrode on the carrier tube by a press fit. The shield electrode may contact the end of the core insulator, overlap it for a short distance or have a gap between itself and the core insulator while all the time being contacted to the carrier tube.

In one preferred embodiment, the mandrel is fixed to the carrier tube and/or the core insulator by the shield electrode which sits partially on the carrier tube and/or the core insulator and partially on the mandrel.

In one embodiment, the method comprises the step of installing a fixing flange onto the core insulator and using a mould which contacts the fixing flange, whereby the volume to be filled is delimited by the core insulator, the fixing flange, the mould and the mandrel.

In one embodiment, the method comprises the step of placing a protection box over the stress relief element and mounting the protection box to the fixing flange, preferably by using spring elements which allow a thermal expansion of the stress relief element in axial direction.

The method of producing a cable end according to this invention, comprises the steps of
a) Providing a cable fitting according to the invention,
b) Providing an end piece of a high voltage cable. The high voltage cable comprises a cable conductor, an insulation layer made of a polymer and a second semiconductive layer surrounding the insulation layer,
c) Exposing, the second semiconducting layer over a first length, the insulation layer over a second length and the cable conductor over a third length and thereby producing a prepared end piece,
d) Placing the prepared end piece in the cable fitting in such a way, that the deflector contacts, preferably directly, the second semiconductive layer and that at least part of the shield electrode touches the insulation layer and that the cable conductor directly contacts either the connector or the head armature or the connection bolt

Preferably, the prepared end piece is placed in such a way in the cable fitting that the insulation layer adjoins the carrier tube. In this embodiment, the outer diameter of the insulation layer is larger than the inner diameter of the carrier tube. The prepared end piece of the cable is prepared in such a way that it is in the position of step d) with respect to the cable fitting once the insulation layer of the cable adjoins the carrier tube.

Preferably, the elastomeric stress relief element is slightly expanded during the insertion of the prepared end piece. For example, pressurised air can be used to expand the stress relief element during the cable insertion.

In one embodiment, the cable conductor is connected to the connector before the connector and the cable are placed inside the cable fitting.

Other advantageous embodiments and combinations of features come out from the detailed description below and the entirety of the claims.

### Brief description of the drawings

The drawings used to explain the embodiments show:
- Fig. 1: A first embodiment of a cable fitting according to the invention.
- Fig. 2: A second embodiment of a cable fitting mounted on a high voltage cable. The cable fitting comprises a connector of the click-in type. Further the carrier tube is a high voltage current conductor.
- Fig. 3: A third embodiment of a cable fitting mounted on a high voltage cable. Its core insulator uses geometrical field control. The cable fitting uses a fitting conductor as high voltage current conductor and a connector of the crimped type.
- Fig.4: A fourth embodiment of a cable fitting mounted on a high voltage cable. The cable conductor is prepared in such a length that it reaches the head armature and connection bolt when the cable is inserted into the fitting. No fitting conductor or connector is needed.
- Fig. 5a: The first step of a method for producing a cable fitting.
- Fig. 5b: A second step of a method for producing a cable fitting.
- Fig. 5c: The cable fitting resulting from the production method shown in Figures 5a and 5b and a fitting conductor with a connector of bolted type only partially inserted in the cable fitting.

In the figures, the same components are given the same reference symbols.

### Preferred embodiments

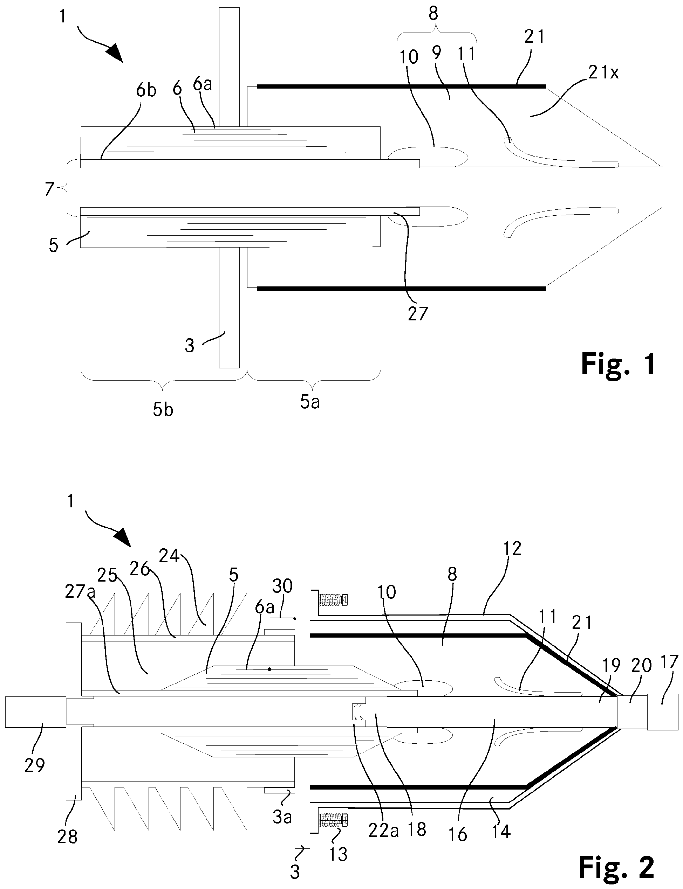

Figure 1 shows a first embodiment of a cable fitting 1 according to the invention. The cable fitting 1 comprises a core insulator 5, a carrier tube 27, a fixing flange 3 and a stress relief element 8.

Figure 1 shows a cross-section. The cable fitting 1 is, with the exception of the wire 21x, axially symmetric.

The core insulator 5 has the shape of a concentric cylinder with two flat ends. The volume inside the core insulator 5 is the central duct 7. The diameter of the central duct 7 equals the inner diameter of the core insulator 5. The central duct 7 has a constant diameter along the whole length of the core insulator 5. The core insulator 5 has a first part 5a and a second part 5b.

A carrier tube 27, having the shape of a concentric cylinder with constant inner and outer diameter, runs inside the central duct 7. The outer diameter of the carrier tube 27 equals the diameter of the central duct 7. The carrier tube 27 is longer than the core insulator 5 and extends out of the first end of the core insulator 5.

A shield electrode 10 has essentially the shape of a concentric cylinder with rounded edges. One of its inner diameters is slightly smaller or equal to the outer diameter of the carrier tube 27. The shield electrode 10 is made of elastomeric material. In this embodiment, there is a small distance between the first end of the core insulator 5 and the shield electrode 10. However, most part of the carrier tube 27 which extends from the first end of the core insulator 5 is covered by the shield electrode 10.

In some distance from the shield electrode 10, there is a deflector 11. The deflector 11 has roughly a shape resembling a hollow cone without a tip. The side with the large opening is oriented towards the core insulator 5. The small opening has an inner diameter equal to the smallest inner diameter of the shield electrode 10, i.e. the smallest inner diameter on the side of the shield electrode 10 which is oriented towards the deflector 11 itself.

At some point along the core insulator 5, in Figure 1 approximately in the middle of the core insulator 5, there is a fixing flange 3. The fixing flange 3 has the shape of a round disc with a circular hole in its centre, which has at least the diameter of the core insulator.

There is an insulating volume 9. The insulating volume 9 is made of cast material and it is elastomeric. The insulating volume 9 is cast around the first part 5a of the core insulator 5, the shield electrode 10 and the deflector 11. Insulating volume 9, shield electrode 10 and deflector 11 form the stress relief element 8. In the embodiment shown in Figure 1, the insulating volume 9 does not reach the fixing flange. In Figure 1, there is therefore a gap between the fixing flange 3 and the stress relief element 8.

The outer shape of the insulating volume 9 is, in Figure 1, that of a concentric cylinder which is tapered in the axial region partially in common with the deflector 11 in the direction pointing away from the fixing flange 3. In other embodiments the insulating volume 9 may retain the cylindrical shape. The inner diameter of the insulating volume 9 equals the inner diameters of the shield electrode 10 and the deflector 11. The outer diameter is, in Figure 1, larger than the outer diameter of the core insulator 5 but smaller than the outer diameter of the fixing flange 3. The shield electrode 10 and the deflector 11 are not completely surrounded by the insulating volume: In the regions where the shield electrode 10 and the deflector 11 have their smallest inner diameter, they define the inner boundary and an electrically conducting contact can be established by touching the electrodes in these regions.

A semiconductive cover 21 covers part of the outer surface of the stress relief element 8. The distance between the shield electrode 10 and the semiconductive cover 21 is chosen such that the resulting electric field does not exceed the dielectric strength of the used insulating material for the insulating volume 9. The semiconductive cover 21 is brought at the ground potential by means of electrical contacting directly or indirectly to a grounded part. In Figure 1, a wire 21x is shows as an example of an electrical contact for grounding the semiconductive cover 21. The wire 21x contacts the deflector and the semiconductive cover 21. In other embodiment, there could also be an electrical contact between the semiconductive cover 21 and the fixing flange 3. In the shown embodiment, the semiconductive cover 21 extends in axial direction from an axial position which is also common to the deflector to an axial position which is common to the outermost conductive foil 6a, thereby concentrating the electric field between the deflector 11, being of ground potential, and the shield electrode 10, being on the high voltage potential inside the stress relief element 8.

It is also possible that the semiconductive cover 21 covers more of the stress relief element 8 or that is covers the complete outer surface of the stress relief element 8.

The core insulator 5 shown in Figure 1 uses capacitive grading. The core insulator 5 comprises therefore concentrically arranged conductive foils 6 embedded in a solidifying polymer material. This casted polymeric material is used to impregnate the crepe paper into which the conductive foils 6 are arranged or any other synthetic material which is used to build the capacitive grading body. The axial extent of the foils decreases with increasing radial distance. Thereby the foils define a shape of a concentric cylinder which is tapered on both ends. The polymer material adds volume to this tapered cylinder such that the overall shape of the core insulator 5 is the one of a concentric cylinder with flat ends described above. The innermost conductive foil 6b is electrically contacted to the carrier tube 27 and therefore at the same voltage potential. The electrical contact is a direct electrical contact because the carrier tube 27 and the innermost conductive foil 6b touch each other in this embodiment. In further embodiments, the contact between the carrier tube 27 and the innermost conductive foil 6b is established via a contact device like a wire or a soldered point.

The insulating volume 9 is made of an elastomeric polymer, like silicone rubber. The conductive shield electrode 10 and the deflector 11 are made of a conductive or semiconductive elastomeric material. For example, the material can be silicone rubber with mixed in carbon black particles.

The fixing flange 3 is typically made of a metal, like steel or aluminium. It is possible that there is no fixing flange 3.

In further embodiments, the inner diameter of at least a part of the shield electrode 10, the deflector 11 and the insulating volume 9 is larger than the diameter of the carrier tube 27. This allows the use of the cable fitting on cables with thicker insulation layers.

In further embodiments, it is possible that the inner diameter of at least a part of the shield electrode 10, the deflector 11 and the insulating volume 9 is smaller than the inner diameter of the carrier tube 27. This allows the use of the cable fitting on cables with thinner insulation layers.

The inner diameter of at least a part of the shield electrode 10, the deflector 11 and the insulating volume 9 is preferably chosen such that it is slightly smaller than the outer diameter of the insulation layer of the cable on which the fitting should be used.

Further, it is possible that it is the innermost conducting foil 6b of the core insulator 5 which extends into the shield electrode 10 in addition or instead of the carrier tube 27.-It is also possible that the carrier tube 27 acts as innermost conducting foil 6b and that therefore the carrier tube 27 is in direct contact with insulating bulk material.

The outermost conducting foil 6a of the core insulator is, in the embodiment of Figure 1, on ground potential and directly contacted to the fixing flange 3. In other embodiments, the outermost conductive foil 6a is indirectly contacted to the fixing flange 3. In other embodiment, the outermost conductive foil 6a is directly or indirectly connected to another part on ground potential.

Figure 2 shows a second embodiment of a cable fitting 1 mounted on a high voltage cable 17. The cable fitting 1 comprises a connector 22a of the click-in type. Further the carrier tube 27a is a high voltage current conductor. The view is again a cross- section, as it was the case in Figure 1.

Figure 2 comprises all parts of figure 1 which the following differences: The core insulator 5 follows the shape of the concentric foil arrangement and is tapered on both of its ends.

The fixing flange 3 comprises a connection section 3a which has the shape of a concentric cylinder with thin walls and an inner diameter which essentially equals the outer diameter of the hollow tube body 26. The connection section 3a extends, beginning at the fixing flange 3, in the direction away from stress relief element 8. The length of the connection section 3a is small compared to the length of the core insulator 5.

The outermost conductive foil 6a of the core insulator 5 does not touch the fixing flange 3 directly, but a grounding device 30 is connected to the outermost conductive foil 6a. The grounding device 30 can serve as a test tap for the cable fitting and provide the direct grounding of the outermost conductive foil 6a. This grounding device 30 can be a braid or wire which connects the outermost conductive foil 6a with the fixing flange 3 or another point, which is on ground potential during use of the cable fitting.

There is a connector 22a of the click-in type mounted inside the carrier tube 27. The connector 22a can be placed anywhere between the shield electrode 10 and the end of the carrier tube 27a within the electric field free zone. The connector 22a is rigid. The connector 22a establishes a good electrical contact and ensures the current flow from the cable conductor 18 to the carrier tube 27a with a low contact resistance. The connector 22a is shaped like a concentric cylinder which is closed on one end. Its inner surface is equipped with barbs and multiple lamellae. A cable conductor pushed into the connector 22a is fixed by the barbs and contacted by the lamellae. The connector 22a has essentially an outer diameter which equals the inner diameter of the carrier tube 27a. The connector 22a is connected to the carrier tube 27a for example by soldering such that there is a well conducting contact between the connector 22a and the carrier tube 27a. It is also possible that the connector 22a can move inside the carrier tube 27a and that the well conducting contact is established by multiple lamellae, i.e. multicontact.

In another embodiment, the connector of the click-in type 22a is an integral part of the carrier tube 27a.

The carrier tube 27a is designed in such a way that it can carry the needed cable conductor current without overheating. Overheating occurs, if the steady-state temperature at any point of the cable fitting exceeds the maximum allowed operation temperature for the surrounding materials and components. The carrier tube 27a is for example made of copper or a copper alloy or another well conducting, thermal and electrical, material. Further its diameter and wall thickness are chosen appropriately.

The stress relief element 8 comprises an insulating volume 9 which contacts the fixing flange 3.

The shield electrode 10 overlaps slightly with the first end of the core insulator 5. The shield electrode 10 covers therefore all of the carrier tube 27 which extends beyond the first part of the core insulator 5.

The whole outer surface of the stress relief element 8 is covered with a semiconductive cover 21. The semiconductive cover 21 of this embodiment contacts directly the fixing flange 3 and the second semicondcutive layer 19 of the cable 17 due to the extent of the semiconductive cover 21 and the placement of the stress relief element 8. The semiconductive cover 21 is grounded via the fixing flange 3 and/or via the second semiconductive layer 19 of the cable 17.

A hollow tube body 26 in the shape of a concentric round cylinder with thin walls and an outer diameter being equal or slightly smaller than the inner diameter of the connection section 3a, is fixed to the fixing flange 3. The fixing can be done by a press fit into the connection section 3a, by an adhesive between the inner surface of the connection section 3a and the outer surface of the hollow tube body 26 or by screws or similar means. Preferably, the fixing is done in such a way, that there is a fluid tight connection between the fixing flange 3 and the hollow tube body 26. The length of the hollow tube body 26 is greater than the extent of the core insulator 5 on the same side of the fixing flange 3. The hollow tube body 26 is made of an insulating material like fibre reinforced epoxy. Sheds 24 made of silicone rubber or other insulating composite materials are arranged on the outside of the hollow tube body 26. The hollow tube body 26 and the sheds 24 form an outdoor insulator.

In another embodiment, the hollow tube body 26 and the sheds 24 are made of porcelain.

One end of the hollow tube body 26 contacts the fixing flange 3. The other end of the hollow tube body 26 contacts the head armature 28. The head armature 28 is a concentric adapter piece in the shape of a round disc made of a conducting material. In the embodiment shown in Figure 2, it has a concentric hole in its centre which extends into a short, thin walled, concentric cylinder. The outer diameter of this cylinder equals the inner diameter of the carrier tube 27a. There is a fluid tight connection between the head armature 28 and the hollow tube body 26. Further, there is an electrical connection between the carrier tube 27a and the head armature 28.

Hollow tube body 26, head armature 28, carrier tube 27a, core insulator 5 and fixing flange 3 delimit a volume which is filled with an insulating medium 25. This insulating medium 25 can be an insulating gel, oil, air, insulating gas or a polymeric material that has a good dielectric strength, good thermal conductivity to allow heat transfer resulting from the current flow and the dielectric power losses and is compressible to allow for thermal expansion of the core insulator 5, of the hollow tube body 26 and of itself.

A protection box 12 is arranged around the stress relief element 8. It has the shape of a concentric cylinder with thin walls which is tapered at one end and comprises an outwards extending flange at the other end. The angle in which it is tapered equals the angle in which the stress relief element 8 is tapered. In an embodiment, where the stress relief element 8 is not tapered but has a flat end, the protection box 12 follows the shape of this stress relief element 8, too and ends in a flat end. The length of the protection box 12, measured on its inside, equals the length of the stress relief element 8, measured on its outside. The inner diameter of the protection box 12 is along its cylindrical part larger than the outer diameter of the stress relief element 8 to allow for expansion of the stress relief element 8. There is consequently a gap 14 between the stress relief element 8 and the protection box 12 in radial direction along the cylindrical part of the protection box 12. The protection box 12 is fixed to the fixing flange 3 by spring elements 13 which push the flange of the protection box 12 towards the fixing flange 3. The spring elements 13 can be realized by nuts and bolts and coil springs: The coil spring is compressed between the nut and the flange of the protection box 12 which is thereby pushed against the fixing flange 3 which is pushed against the head of the bolt.

In the tapered part of the stress relief element 8 there is no gap between the protection box 12 and the stress relief element 8. The protection box 12 supports in this way the weight of the stress relief element 8. The spring elements/bolts 13 allow for expansion of the stress relief element 8 in axial direction.

In the embodiment shown in Figure 2, the protection box 12 has no electrical function but only protects the stress relief element 8 from the environment. In other embodiments, a conducting protection box 12 can establish an electrical contact between a semiconductive cover 21 and the fixing flange 3 and/or the cable sheath 20 which are both on ground potential.

Figure 2 shows further the end of a high voltage cable 17. From the inside to the outside, the cable comprises a cable conductor 18, an insulation layer 16, a second semiconductive layer 19, a cable sheath 20 and a protective layer. At the cable end, one layer after the other is removed such that every one of these layer is the outermost layer for a certain length. At first the protective layer is removed, leaving the cable sheath 20 as outermost layer. In the embodiment shown in Figure 2, the protective box 12 touches the cable sheath 20 in this region. Shortly behind this contact point, the cable sheath 20 is removed, leaving the second semiconductive layer 19 to be the outermost layer. The deflector 11 contacts the second semiconductive layer 19. Shortly behind this contact point, the second semiconductive layer 19 is removed, leaving the insulation layer 16 to be the outermost layer. The insulation layer 16 is the outermost layer in the region contacting the shield electrode 10 and, in the embodiment shown in Figure 2, it even extends into the carrier tube 27a. Shortly before the connector of click-in type 22a, the insulation layer 16 stops and only the free cable conductor 18 enters the receiving section of the connector of mulitcontact type 22a and is mechanically fixed and electrically connected by its barbs and/or lamellae.

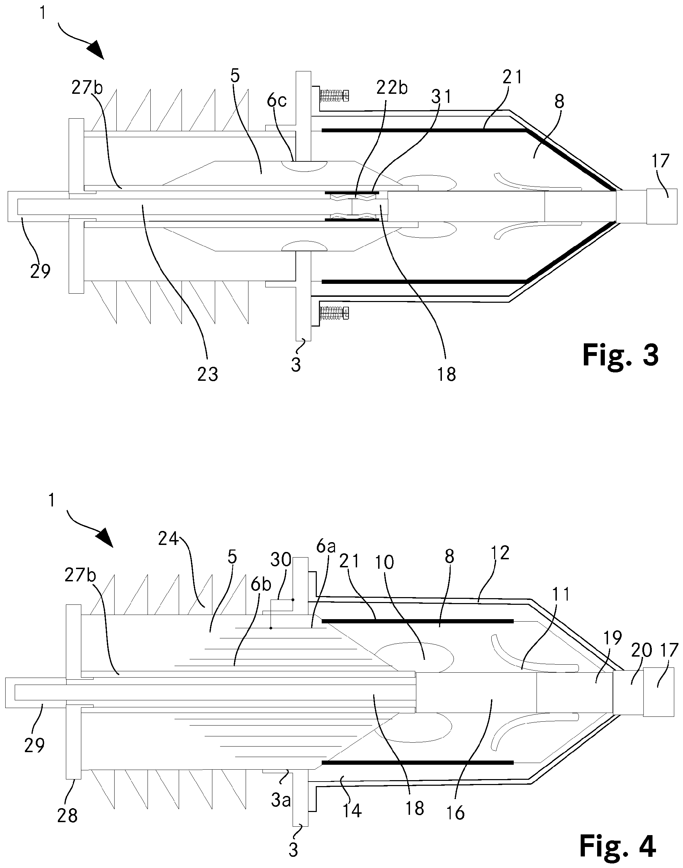

Figure 3 shows a third embodiment of a cable fitting 1 mounted on a high voltage cable 17. It is again a cross-section which is shown. This third embodiment is very similar to the second embodiment shown in Figure 2. In contrast to the second embodiment, the core insulator 5 of the third embodiment uses geometrical field control. Further, the cable fitting uses a fitting conductor 23 as high voltage current conductor. The connector 22b is of a crimped type.

The core insulator 5 is mainly made of an insulating material and it has the shape of a concentric cylinder with both ends being tapered. Its inner diameter equals the outer diameter of the carrier tube 27b and its outer diameter equals the diameter of the circular hole of the fixing flange 3. The core insulator 5 comprises a geometric field control guard electrode 6c which contacts the fixing flange 3. The geometric field control guard electrode 6c is at the same potential as the fixing flange 3, which is typically the ground potential.

The cable conductor 18 is connected to the connector 22b of crimped type. The connector 22b has the shape of a hollow, concentric cylinder with an inner diameter being larger than the diameter of the cable conductor 18 and an outer diameter being smaller than the inner diameter of the carrier tube 27b. The ends of this concentric cylinder are receiving sections. In other embodiments, there is a solid wall in the inside of the cylinder separating the two receiving sections from each other. The cable conductor 18 is inserted in one receiving section of the connector 22b. Afterwards the connector 22b is locally deformed in such a way that the cable conductor 18 is mechanically and electrically fixed to the connector 22b. A fitting conductor 23 of essentially the same construction as the cable conductor 18 is placed and fixed in a similar way to the other receiving section of the connector 22b. The fitting conductor 23 is fixed to the connection bolt 29 on its other end.

There is a connector insulation 31 arranged around the connector 22b. The connector insulation 31 can be an insulating tape wound around or an insulating tube slipped on the connector of crimped type 22b after the crimping of the cable conductor 18 and the fitting conductor 23.

In this embodiment, the current is carried by the fitting conductor 23. The connector of crimped type 22b connects the cable conductor 18 and the fitting conductor 23 in a mechanical stable and well conducting way.

The semiconductive cover 21 covers only part of the stress relief element 8: It does not extent all the way to the fixing flange 3 but only up to an axial position which is common to an axial position of the geometric field control guard electrode 6c.

Figure 4 shows a forth embodiment of a cable fitting 1 mounted on a high voltage cable 17. It is again a cross-section which is shown. The cable conductor 18 is prepared in such a length that it reaches the head armature 28 and connection bolt 29 when the cable 17 is inserted into the fitting 1. No fitting conductor 23 or connector 22 is needed.

The core insulator 5 and the carrier tube 27 of this cable fitting 1 are similar to the one shown in Figure 1. In contrast to the embodiment shown in Figure 1, this core insulator 5 is tapered on its first end.

In this forth embodiment, the core insulator 5 is directly surrounded by the sheds 24.-The core insulator 5 and the carrier tube 27 end at the same axial position. A head armature 28 is located at this end. In contrast to the second and the third embodiment, the forth embodiment does not comprise a connector 22. However, other embodiments have all features of the fourth embodiment but comprise a connector 22 and possibly a fitting conductor 23 as shown in Figures 2 or 3.

The fixing flange 3 comprises a connection section 3a as shown in Figures 2 and 3. The ways to connect the core insulator 5 are analogue to the ways to connect the hollow tube body 26 to the connection section 3a and the way the outermost conducting foil 6 of the core insulator 5 are the same as shown in Figure 2. The fourth embodiment comprises a grounding device 30 similar to the one of Figure 2.

The shield electrode 10 of this embodiment sits on the carrier tube 27 and partially on the core insulator 5. The innermost conductive layer of the core insulator 5 and the carrier tube 27 are both in direct contact and therefore electrically contacted with the shield electrode 10.

The insulating layer 16 of the cable 17 has an outer diameter which is about the same as the outer diameter of the carrier tube 27.

The stress relief element 8 has an outer diameter which is slightly larger than the outer diameter of the outermost conductive foil 6a but smaller than the outer diameter of the core insulator 5. Therefore, the insulating volume 9 is not in contact with the fixing flange 3 but only with the core insulator 5 in its tapered region.

There is also a protection box 12, with a shape similar to the ones shown in Figures 2 and 3. In contrast to the one shown in Figure 2, the internal length of the protection box 12 of the forth embodiment is slightly larger than the external length of the stress relief element 8. Therefore, there is a gap 14 everywhere between the protection box 12 and the stress relief element 8. As thermal expansion in axial direction is possible due to the gap 14, the spring elements can be omitted and the protection box 12 can be mounted to the fixing flange 3 in any common way, for example with an adhesive, by soldering or by screws.

In Figure 4, the semiconductive cover 21 extends on the outside of the stress relief element 8 from the contact point with the core insulator 5 to an axial region common with the deflector 11. The arrangement is such that there is a common axial region to the outermost conductive layer 6a of the core insulator 5 and the semiconductive cover 21. The semiconductive cover 21 is grounded by a contact to the fixing flange 3, to the grounding device 30, to the deflector 11, to the second semiconductive layer 19 and/or to the cable sheath 20. This contact is not shown in Figure 4.

Due to the fact, that the inner diameter of the carrier tube 27 is smaller than the outer diameter of the insulating layer 16 of the cable, this embodiment is particularly easy to install: The cable 17 is prepared outside of the cable fitting 1 where distances can be measured precisely. Then the cable 17 is inserted in the fitting 1. The carrier tube 27 inhibits any further forward movement of the cable 17 once it has reached its final position. Thereby, it is sufficient to know the distances between the head armature 28, the end of the carrier tube 27 and the deflector 11 as well as the minimum length of the cable conductor 18 needed to establish a connection to the connection bolt 29 to enable a precise positioning of the cable 17 inside the cable fitting 1.

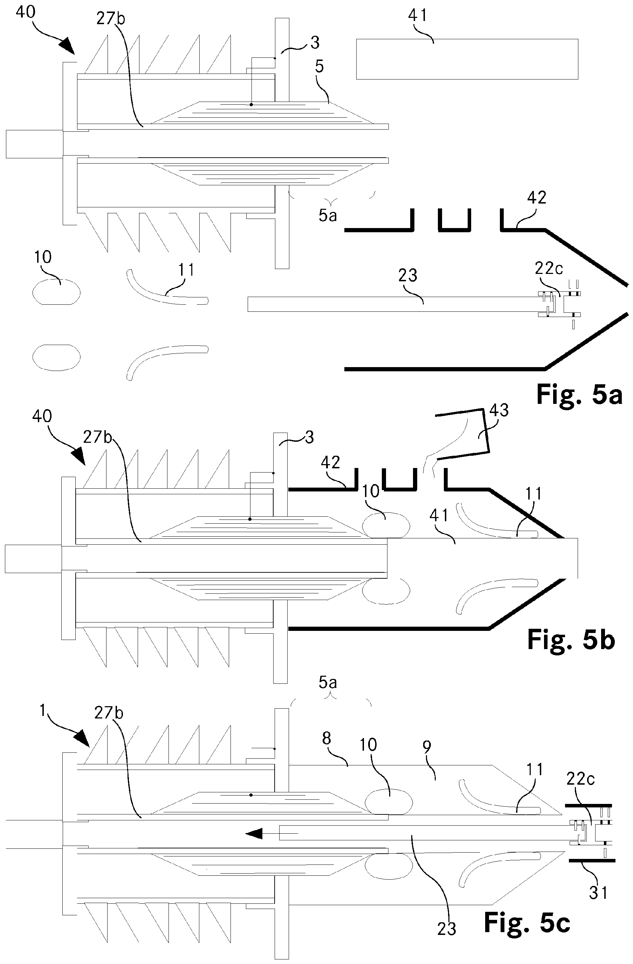

Figures 5a and 5b illustrate a method for producing a cable fitting 1. All parts are shown in cross-sections along the longitudinal axis.

Figure 5a illustrates the first step of a method for producing a cable fitting 1. A prefabricated subunit 40, a mandrel 41, a shield electrode 10, a deflector 11, a mould 42 and preferably a fitting conductor 23 equipped with a connector of the bolted type 22c are provided. The prefabricated subunit 40 comprises a core insulator 5, a fixing flange 3 and a carrier tube 27b. The core insulator 5 extends on both sides of the fixing flange 3. A candidate for becoming the first part 5a of the core insulator 5 protrudes from the prefabricated subunit 40. The mandrel 41 is a rod with a diameter equal to the smallest inner diameter of the deflector 11. The shield electrode 10 has the shape of a hollow circular cylinder with rounded edges and is made of a conducting or semiconducting elastomeric material. The deflector 11 has a shape similar to a hollow cone with a central hole of the same diameter as the inner diameter of the shield electrode 10. The inner diameter of the shield electrode 10 and of the deflector 11 is the same as the outer diameter of the mandrel 41 in this embodiment. The mould 42 has the shape of a concentric cylinder with thin walls and which is tapered on one end in this embodiment. The tapered end has a first central hole in it with a diameter which equals the outer diameter of the mandrel 41. In addition, on the mould 42 there is at least one inlet and one outlet through which a deaeration of the mould 42 can be performed and then a liquid cast material 43 can be filled into the mould 42. The first step of the method for producing a cable fitting 1, which is illustrated here, comprises the step of providing these objects.

In the next steps, illustrated in Figure 5b, the shield electrode 10 is partially slipped over the carrier tube's 27b extension outside the first end of the core insulator 5. At the second step the mandrel 41 is partly slipped within the shield electrode 10 and the deflector 11 is slipped on the mandrel 41. At the next step the mould 42 is placed in such a way that the mandrel 41 is in the first central hole of the mould 42 where the mandrel 41 is rigidly fixed, providing a fluid and air tight sealing. The mould 42 is fixed on the flange 3 of the prefabricated subunit 40 or, in another embodiment, on the core insulator 5, such that there is a fluid and air tight sealing. Once the mould 42 is mounted, the liquid cast material 43 is poured into the mould 42 through the inlet. The air which is displaced by the liquid cast material 43 escapes through the outlet.

Another way of casting is by producing a vacuum inside the hollow volume within the mounted mould 42 and then injecting the liquid cast material 43. Depending on the type of liquid cast material 43, injection moulding under elevated temperatures and high pressure may be necessary. The mould 42 has at least two openings, one inlet and one outlet, which offer a variety of possibilities for casting the liquid cast material in many standardised and well known ways.

After curing, the mould 42 and the mandrel 41 are removed. A cable fitting 1 is the result. The cable fitting 1 comprises a stress relief element 8 with an insulating volume 9 which is cast around a first part 5a of the core insulator 5. This is shown in Figure 5c.

A cable conductor of a suitably prepared cable can be connected to the connector of the bolted type 22c. The bolted type of connector 22c connects the conductors by bolts which are inserted perpendicular to the longitudinal axis of the conductors though holes in the sides of the connector 22c. The bolts and holes can have thread such that the bolts are screwed into the conductor 22c. Once the conductors of the cable 18 and the fitting 23 are connected to the connector 22c, the connector 22c is surrounded by a connector insulator 31. The connector insulator 31 can be a layer of insulating paint which is sprayed on the connector 22c or an insulating cover piece surrounding the connector.

An arrow in Figure 5c indicates the direction in which the cable is pushed into the cable fitting.

In summary, it is to be noted that the different ways to design the protection box 12, the stress relief element 8, the core insulator 5, the carrier tube 27 with the ways to connect the cable conductor 18, and the left hand side of the cable fitting 1 can all be combined with each other. The "left hand side of the cable fitting 1" includes everything which is shown on the left side of the fixing flange 3 in the Figures 1 to 5c: The design of the left hand side of the cable fitting comprises therefore the presence or absence of the following parts and their design: the connection bolt 29, the head armature 28, the sheds 24, the hollow tube body 26, the insulating medium 35 and the grounding device 30, as well as the connection section 3a.

It is also possible to exchange the electric field controlling conductive elements: Instead of a capacitive grading field control system with conductive foils 6, a geometric field control system using a geometric field control guard electrode 6c can be used and vice versa.

The conductive foils 6 and the insulating bulk material can be replaced, completely or partially, by conductive and insulating layers. For example, conductive foils may be coated with an insulating material or a layer of insulating material can be painted with a conductive or semiconductive paint resulting in a conductive layer, before another layer of insulating material is applied on top of it.

Besides using a prefabricated subunit 40, the method to produce a cable fitting 1 can also include the steps of only providing the core insulator 5, the shield electrode 10, the deflector 11, the mandrel 41 and a suitable mould 42 and to cast the stress relief element 8 onto the first part 5a of the core insulator 5 as shown in Figure 5b. All further parts on the left hand side of the cable fitting 1 as well as the carrier tube 27 and the fixing flange 3 can be mounted later. It is also possible that a subset of these components are mounted before the casting and the rest of it later or not at all. Further, a fitting conductor 23 and a connector 22 can be omitted.

All connector types 22 can be exchanged: Instead of a click-in type connector 22a, one can use a bolted type connector 22c or a crimping type connector 22b or any other common type of connector 22. It is possible that a connector 22 comprises two receiving sections and both are of a different type. The combination of a connector 22 and a fitting conductor 23 can be replaced by an elongated connector. A fitting conductor 23 can be replaced by a well conducting carrier tube 27 and vice versa.

The shield electrode 10 can be in direct contact with the cable conductor 18.

## Claims

1. Cable fitting (1) for high voltage cables, comprising
a) a core insulator (5) with a central duct (7) suitable to receive a high voltage current conductor and
b) a carrier tube (27), which is electrically conducting or semiconducting along its length and located within the central duct (7) of the core insulator (5) or being a part of the core insulator (5) and
c) a stress relief element (8) being elastomeric and comprising an insulating volume made of a cast material which is elastomeric and electrically insulating, a field deflector (11) made of elastomeric, electrically conductive or semiconductive material and a shield electrode (10) made of elastomeric, electrically conductive or semiconductive material,
d) wherein the insulating volume is cast around a first part of the core insulator (5) thereby establishing a tight connection between the core insulator (5) and the stress relief element (8).

2. Cable fitting (1) according to claim 1, whereby the core insulator (5) is more rigid than the insulating volume of the elastomeric stress relief element (8).

3. Cable fitting (1) according to any one of claims 1 to 2, whereby the insulating volume is made of an elastomeric polymer, preferably silicone rubber.

4. Cable fitting (1) according to any one of claims 1 to 3, whereby the core insulator (5) comprises a rigid, polymeric material, preferably epoxy resin.

5. Cable fitting (1) according to any one of claims 1 to 4, whereby the outside of the stress relief element (8) is at least partially covered with a semiconductive cover (21), whereby the semiconductive cover (21) is preferably made of conductive or semiconductive paint painted or sprayed onto the outside of the stress relief element (8) and whereby preferably, the conductive or semiconductive cover (21) serves as ground potential.

6. Cable fitting (1) according to any one of claims 1 to 5, whereby the core insulator (5) is a capacitive grading body which preferably consists of a concentric arrangement of conductive foils (6) and insulating bulk material, the later preferably being made of crepe paper or another material impregnated or filled by a liquid casting material which solidifies by means of curing to a rigid polymer insulating material, preferably epoxy resin.

7. Cable fitting (1) according to any one of claims 1 to 6, comprising a fixing flange (3), whereby, preferably, the fixing flange (3) acts as a barrier to the insulating volume (9) such that the stress relief element (8) is only on one side of the fixing flange (3) and the core insulator (5) extends on both sides of the fixing flange (3).

8. Cable fitting (1) according to any one of claims 1 to 7 whereby the carrier tube (27) extends from a contact region with the shield electrode (10) to the head armature of the cable fitting to which the carrier tube is preferably connected in a fluid-tight way and whereby preferably, the carrier tube (27) and the innermost conductive foil (6b) of the core insulator (5) contact each other at least indirectly.

9. Cable fitting (1) according to any one of claims 1 to 8 comprising a protection box (12) which surrounds the stress relief element (8) and which is preferably connected to the fixing flange (3) with spring elements in order to allow thermal expansion of the stress relief element (8) in axial direction, and whereby there is preferably a gap, filled with air or compressible material, in radial direction between the stress relief element (8) and the protection box (12) in order to allow thermal expansion and expansion due to the insertion of a high voltage cable in radial direction.

10. Cable fitting (1) according to any one of claims 1 to 9, comprising a connector (22) of preferably a bolted, crimped, click-in or multicontact type, whereby the connector (22) is placed inside the carrier tube (27), preferably inside the first part of the core insulator (5).

11. Cable end comprising
a) a high voltage cable comprising
i) a cable conductor,
ii) preferably, a first semiconductive layer in direct contact with the cable conductor,
iii) an insulation layer made of a polymer surrounding the cable conductor and, if present, the first semiconductive layer,
iv) a second semiconductive layer surrounding the insulation layer,
v) preferably, a cable sheath surrounding the second semiconductive layer and
vi) protective layer surrounding the second semiconductive layer and, if present, the cable sheath, and
b) a cable fitting according to any one of claims 1 to 10,
c) whereby the second semiconductive layer and/or the cable sheath contacts the deflector, preferably directly, and
d) preferably the cable sheath and/or the second semiconductive layer contacts, directly or indirectly, the semiconductive cover and/or the protection box, and
e) whereby the cable conductor contacts, at least indirectly, the shield electrode in such a way that both are at the same electric potential.

12. Cable end according to claim 11,
whereby the cable conductor is connected to the connector (22) and whereby there is an insulator arranged between the connector (22) and the carrier tube (27) such that there is no direct but only an indirect electrical contact between the connector (22) and the carrier tube (27) and
whereby there is a direct electrical contact between the connector (22) and the fitting conductor (23),
whereby there is a direct electrical contact between the fitting conductor (23) and the connection bolt (29),
whereby the connection bolt either directly contacts the carrier tube (27) or the connection bolt directly contacts the head armature (28) and the head armature (28) directly contacts the carrier tube (27),
and the carrier tube (27) is in direct contact with the shield electrode (10)
and whereby in this way, during operation, the shield electrode is on the same potential as the cable conductor but a current flowing through the carrier tube (27) is essentially inhibited.

13. Cable end according to claim 11,
whereby the cable conductor (18) is in direct contact with the connection bolt (29) and/or the head armature (28) and whereby the connection bolt (29) and/or the head armature (28) is in direct contact with the carrier tube (27), and whereby the carrier tube (27) is in direct contact with the shield electrode (10).

14. Method to produce a cable fitting according to any one of claims 1 to 10, comprising the following steps:
a) Providing a core insulator (5) with a central duct (7) suitable to receive a high voltage current conductor and a carrier tube (27) which is located within the central duct (7) or which is part of the core insulator (5) and which is semiconducting or conducting along its length,
b) Providing a mandrel (41) of cylindrical shape having over most of its length a diameter equal to the smallest inner diameter of the deflector (11) and preferably equal to the smallest inner diameter of the shield electrode (10) and,
c) Providing a field deflector (11) and a shield electrode (10), both made of elastomeric and conductive or semiconductive material
d) Providing a mould (42), preferably in the shape of a circular cylinder with a cone-shaped or a flat end, whereby is the mould has a first central opening of the size of the outer diameter of the mandrel (41) located on an extension of the central duct (7) when the mould is mounted to the core insulator (5) and the mould has a second central opening on the end opposing the first central opening
e) Placing the shield electrode (10) at least partially on the carrier tube and/or the core insulator (5) and thereby establishing a direct contact between the shield electrode (10) and the carrier tube (27)
f) Arranging the mandrel (41) with respect to the carrier tube and the core insulator in such a way that the mandrel follows the extension of the carrier tube (27) and preferably in such a way that the mandrel (41) is partially surrounded by the shield electrode and that preferably a part of the mandrel adjoins the core insulator and/or the carrier tube (27),
g) Placing the field deflector (11) on the mandrel (41) at a given distance from the shield electrode (10)
h) Placing the mould (42) around the mandrel (41) carrying the shield electrode (10) and the field deflector (11) such that, preferably, the mandrel (41) closes the first central opening in the mould (42), and such that preferably the core insulator and/or the fixing flange closes the second central opening in the mould (42),
i) pouring a cast material (43) in its liquid state, preferably a liquid silicone mass prepared for casting, inside the mould (42) and thereby covering at least the first part of the core insulator (5a), the shield electrode (10) and the field deflector (11) with the cast material (43),
j) curing, and preferably vulcanizing, the cast material (43) such that is becomes the insulating volume (9)
k) after curing, removing the mandrel (41).

15. Method of producing a cable end according to any one of claims 11 to 13, comprising the steps of
a) Providing a cable fitting (1) according to any one of claims 1 to 10
b) Providing an end piece of a high voltage cable, whereby the high voltage cable comprises a cable conductor, an insulation layer made of a polymer and a second semiconductive layer surrounding the insulation layer
c) Exposing the second semiconductive layer over a first length, the insulation layer over a second length and the cable conductor over a third length and thereby producing a prepared end piece,
d) Placing the prepared end piece in the cable fitting in such a way, that the deflector contacts, preferably directly, the second semiconductive layer and that at least part of the shield electrode touches the insulation layer and that the cable conductor directly contacts either the connector or the head armature or the connection bolt,
e) preferably placing the prepared end piece in the cable fitting in such a way that the insulation layer adjoins the carrier tube.
